# EUROPÄISCHE PATENTANMELDUNG

(11) **EP 3 269 627 A1**
(43) Veröffentlichungstag der Anmeldung: **17.01.2018**
(21) Anmeldenummer: 17179354.0
(22) Anmeldetag: 03.07.2017
(51) Int. Cl.: B62M 6/40, B62M 6/50, B62M 6/65

(54) **VERFAHREN ZUR STEUERUNG EINES ELEKTRISCHEN HILFSANTRIEBS SOWIE ELEKTRISCHER HILFSANTRIEB UND FAHRZEUG MIT EINEM DERARTIGEN HILFSANTRIEB**

(30) Priorität: 14.07.2016 DE 102016113016
(71) Anmelder: Lakeview Innovation Ltd., 6374 Buochs (CH)
(72) Erfinder: Juchli, Dominik, 8055 Zürich (CH); Dominique, Martin, CH-8800 Thalwil (CH)
(74) Vertreter: Grünecker Patent- und Rechtsanwälte PartG mbB

(57) **Zusammenfassung**

Die vorliegende Erfindung betrifft ein Verfahren zur Steuerung eines elektrischen Hilfsantriebs (2) eines Fahrzeugs mit einem muskelkraftbetriebenen Antriebsstrang, wobei zur Steuerung des Hilfsantriebs (2) das Signal eines Sensors (3) erfasst und ausgewertet wird. Erfindungsgemäß ist vorgesehen, dass der muskelkraftbetriebene Antriebsstrang einen Freilauf (4) aufweist, wobei die vom Freilauf (4) erzeugten Geräusche und/oder Vibrationen von dem Sensor (3) erfasst und zur Steuerung des Hilfsantriebs (2) ausgewertet werden.

## Beschreibung

Die vorliegende Erfindung betrifft ein Verfahren zur Steuerung eines elektrischen Hilfsantriebs eines Fahrzeugs mit einem muskelkraftbetriebenen Antriebsstrang nach dem Oberbegriff des unabhängigen Anspruchs 1. Das gattungsgemäße Verfahren sieht vor, dass zur Steuerung des Hilfsantriebs das Signal eines Sensors erfasst und ausgewertet wird.

Bei dem Fahrzeug kann es sich beispielsweise um ein E-Bike handeln. Der Hilfsantrieb des E-Bike darf nur dann zugeschaltet werden, wenn der Fahrer die Pedale aktiv bewegt und dadurch das Fahrrad antreibt. Laut gesetzlicher Bestimmung darf das Fahrrad nicht ausschließlich durch den Elektromotor angetrieben werden. Es ist daher notwendig, die Zuschaltung des elektrischen Hilfsantriebs geeignet zu steuern.

Um die Zuschaltung des Hilfsantriebs und den Grad der Unterstützung zu steuern, wird häufig ein Kraft- oder Drehmomentsensor verwendet. Ein derartiges gattungsgemäßes Verfahren ist beispielsweise in DE 10 2010 026810 A1 beschrieben.

Aus EP 0909940 A2 ist ein Verfahren bekannt, bei dem die Vibrationen der Fahrradkette mittels eines akustischen Sensors gemessen und anhand der Messwerte die übertragene Leistung ermittelt wird.

Aufgabe der vorliegenden Erfindung ist es, ein Verfahren der gattungsgemäßen Art anzugeben, das auf möglichst einfache Weise eine besonders frühzeitige Zuschaltung des elektrischen Hilfsantriebs gewährleistet.

Die Aufgabe wird gelöst durch die Merkmale des unabhängigen Anspruchs 1. Demnach liegt bei dem Verfahren der gattungsgemäßen Art dann eine erfindungsgemäße Lösung der Aufgabe vor, wenn der muskelkraftbetriebene Antriebsstrang einen Freilauf aufweist, wobei die vom Freilauf erzeugten Geräusche und/oder Vibrationen von dem Sensor erfasst und zur Steuerung des Hilfsantriebs ausgewertet werden.

Wenn der muskelbetriebene Antriebsstrang vom Benutzer des Fahrzeugs derart betätigt wird, dass er das Fahrzeug antreibt, werden vom Freilauf keine Geräusche erzeugt. Sobald der Benutzer den muskelbetriebenen Antriebsstrang nicht mehr betätigt, kommt es im Freilauf in der Regel zur Entstehung von Klickgeräuschen, die auf einfache Weise mittels eines Sensors erfasst und ausgewertet werden können. Die Klickgeräusche ändern sich, sobald der Benutzer des Fahrzeugs die Betätigung des muskelkraftbetriebenen Antriebsstrangs aufnimmt. Auch die Änderung der Klickgeräusche kann erfasst und entsprechend ausgewertet werden. Dadurch ist eine frühzeitige Zuschaltung des Hilfsantriebs möglich.

Vorteilhafte Ausgestaltungen des erfindungsgemäßen Verfahrens sind Gegenstand der Unteransprüche.

Gemäß einer besonders bevorzugten Ausführungsform der vorliegenden Erfindung weist das Fahrzeug mindestens ein drehbar gelagertes Rad auf, wobei zur Steuerung des Hilfsantriebs auch die Rotationsgeschwindigkeit sowie Rotationsrichtung des Rades erfasst wird. Bei dem Rad kann es sich vorzugsweise um das angetriebene Rad des Fahrzeugs handeln. Alternativ dazu kann aber auch die Rotationsgeschwindigkeit und Rotationsrichtung eines nicht angetriebenen Rades erfasst werden. Beispielsweise kann bei einem Fahrrad mit Hinterrad-Hilfsantrieb die Rotationsgeschwindigkeit und Rotationsrichtung des nicht angetriebenen Vorderrads erfasst werden. Die zusätzliche Erfassung der Rotationsgeschwindigkeit und Rotationsrichtung mindestens eines Rades des Fahrzeugs erlaubt es, dass Zustände erkannt werden können, in welchen keine Zuschaltung des Hilfsantriebs erfolgen soll, obwohl die Auswertung der Geräusche des Freilaufs für sich allein betrachtet die Zuschaltung des Hilfsantriebs zur Folge hätte.

Gemäß einer besonders bevorzugten Ausführungsform der vorliegenden Erfindung weisen die vom Freilauf erzeugten Geräusche und/oder Vibrationen ein bestimmtes periodisch wiederkehrendes Muster auf, dem eine Frequenz des Freilaufs zugeordnet werden kann, wobei der Hilfsantriebs zugeschaltet wird, sobald die Frequenz eine vorbestimmte erste Frequenz unterschreitet. Bei dem periodisch wiederkehrenden Muster kann es sich um ein Klicken des Freilaufs handeln, welches von dem Sensor erfasst wird. Die Frequenz des Freilaufs ist in diesem Fall eine Klickfrequenz. Ein Klicken des Freilaufs tritt beispielsweise bei einem Freilauf mit zumindest einer Sperrklinke auf. Gleiches gilt auch für einen Zahnscheibenfreilauf, wie er zum Beispiel in DE 102011110199 A1 beschrieben ist. Der Hilfsantrieb wird in anderen Worten dann zugeschaltet, sobald der zeitliche Abstand zwischen zwei aufeinanderfolgenden Klicks einen vorbestimmten Grenzwert überschreitet. Bei dieser Ausführungsform kann beispielsweise bei einem E-Bike die relative Rotationsgeschwindigkeit zwischen dem Kettenritzel und der Hinterradnabe durch Erfassung der Klickfrequenz des Freilaufs bestimmt werden. Tritt der Fahrer während der Fahrt in die Pedale, so wird das Ritzel relativ zur Hinterradnabe abgebremst, sodass die zeitlichen Abstände der aufeinanderfolgenden Klicks größer werden, bis das Ritzel mit der Hinterradnabe schließlich in Eingriff ist. Ritzel und Hinterradnabe drehen sich dann gleich schnell. Der Vorteil dieser Ausführungsform ist, dass das Treten der Pedale auch schon vor der eigentlichen Drehmomenteinleitung zuverlässig erkannt werden kann, sodass auch eine frühzeitige Zuschaltung des Elektroantriebs möglich ist.

Gemäß einer weiteren besonders bevorzugten Ausführungsform der vorliegenden Erfindung bleibt der Hilfsantrieb abgeschaltet, wenn das Rad, dessen Rotationsgeschwindigkeit und Rotationsrichtung erfasst wird, stillsteht oder rückwärts dreht. Dadurch wird eine ungewollte Zuschaltung des Hilfsantriebs in den genannten Fällen vermieden. Der Hilfsantrieb kann auch abgeschaltet bleiben, wenn das Rad langsamer wird. Dabei muss zusätzlich erfasst werden, ob der Fahrer bewusst bremst oder langsamer werden möchte, oder ob beispielsweise ein steigendes Gefälle ursächlich ist für ein ungewolltes Langsamer werden.

Gemäß einer weiteren bevorzugten Weiterbildung des erfindungsgemäßen Verfahrens wird der Hilfsantrieb nach der Zuschaltung wieder abgeschaltet, sobald ein ein bestimmtes periodisch wiederkehrendes Muster der vom Freilauf erzeugten Geräusche und/oder Vibrationen wieder erfasst wird. Sofern es sich bei dem periodisch wiederkehrenden Muster um ein Klicken des Freilaufs handelt, wird der Hilfsantrieb demnach wieder abgeschaltet, sobald das Klicken des Freilaufs wieder auftritt.

Eine sichere Benutzung des Fahrzeugs ist gewährleistet, wenn gemäß einer weiteren bevorzugten Ausführungsform der vorliegenden Erfindung die Frequenz des Freilaufs mit der Rotationsgeschwindigkeit des Rades verglichen wird, wobei der Hilfsantrieb nicht zugeschaltet wird, wenn die Frequenz zunächst über einer zweiten Frequenz liegt, die sich bei der momentanen Rotationsgeschwindigkeit des Rades und Stillstand des muskelbetriebenen Antriebsstrang einstellt, und die Frequenz anschließend auf die zweite Frequenz zurückgeht. Damit wird auch eine Situation erfasst, bei der ein Benutzer des Fahrzeugs rückwärts in die Pedale tritt und die Pedale anschließend wieder anhält. Durch das Rückwärtstreten wird die Frequenz zunächst erhöht, wobei durch das Stoppen der Pedalbewegung die Frequenz wieder verringert wird. Um eine Zuschaltung des Hilfsantriebs in dieser Situation in jedem Fall zu vermeiden, muss die erste Frequenz stets unter der zweiten Frequenz liegen. Gemäß einer bevorzugten Weiterbildung des erfindungsgemäßen Verfahrens kann die erste Frequenz auch dynamisch in Abhängigkeit von der Rotationsgeschwindigkeit des Rades, dessen Rotationsgeschwindigkeit und Rotationsrichtung erfasst werden, festgelegt werden.

Die vorliegende Erfindung stellt auch einen elektrischen Hilfsantrieb für ein Fahrzeug mit einem muskelkraftbetriebenen Antriebsstrang bereit, wobei der muskelkraftbetriebene Antriebsstrang einen Freilauf aufweist, dessen Geräusche und/oder Vibrationen von einem Sensor erfassbar und zur Steuerung des Hilfsantriebs auswertbar sind, und wobei der elektrische Hilfsantrieb eine Steuerung zur Ausführung des erfindungsgemäßen Verfahrens aufweist.

Nachfolgend werden vorteilhafte Ausführungsformen des elektrischen Hilfsantriebs beschrieben.

Gemäß einer bevorzugten Ausführungsform des erfindungsgemäßen elektrischen Hilfsantriebs ist dieser als Nabenantrieb eines drehbar gelagerten Rades des Fahrzeugs konzipiert, wobei die Steuerung des Hilfsantriebs derart ausgeführt ist, dass sie die Rotationsgeschwindigkeit des Rades über eine Kommutierungssensorik oder Kommutierungselektronik eines Elektromotors des Hilfsantriebs bestimmt. Da die Kommutierungssensorik oder Kommutierungselektronik ohnehin für den Betrieb des Elektromotors notwendig ist, wird bei dieser Ausführungsform keine zusätzliche Sensorik zur Erfassung der Rotationsgeschwindigkeit des Rades benötigt. Diese Ausführungsform ist daher besonders kostengünstig zu realisieren. Besonders bevorzugt basiert die Kommutierungssensorik bzw. Kommutierungselektronik auf dem Hall-Effekt. Alternativ kann die Rotationsgeschwindigkeit auch durch ein sensorloses Motorsteuerungsverfahren bestimmt werden. Selbstverständlich ist es auch möglich, die Rotationsgeschwindigkeit des Rades auch außerhalb des Elektromotors mittels Sensoren zu messen, zum Beispiel mittels magnetischer oder optischer Sensoren, die beispielsweise ein an den Speichen des Rades angebrachtes Target detektieren.

Besonders bevorzugt umfasst der Hilfsantrieb den Sensor. Der Sensor kann dabei entweder in den Hilfsantrieb integriert oder auch extern vorgesehen sein.

Weiter besonders bevorzugt handelt es sich bei dem Sensor um einen akustischen Sensor. Insbesondere kann auch ein Beschleunigungssensor, welcher dazu geeignet ist Körperschall zu detektieren, als akustischer Sensor verwendet werden. Diese Ausführungsform ist besonders kostengünstig und gleichzeitig zuverlässig. Alternativ kann auch ein Vibrationssensor verwendet werden, der die beim Klicken entstehenden Vibrationen erfasst. Die beiden genannten Sensorvarianten können auch miteinander kombiniert werden, um eine besonders sichere Erfassung der vom Freilauf erzeugten Geräusche und/oder Vibrationen sowie eine Redundanz der Erfassung zu ermöglichen.

Die vorliegende Erfindung stellt ferner ein Fahrzeug mit einem muskelkraftbetriebenen Antriebsstrang bereit, wobei der muskelkraftbetriebene Antriebsstrang einen Freilauf aufweist, dessen Geräusche und/oder Vibrationen von einem Sensor erfassbar sind, wobei das Fahrzeug ferner einen elektrischen Hilfsantrieb gemäß einer der vorstehend beschriebenen Ausführungsformen aufweist.

Ein Ausführungsbeispiel der vorliegenden Erfindung wird im Folgenden anhand von Zeichnungen näher erläutert.

Es zeigen:
- Figur 1:: ein Fahrrad mit einem erfindungsgemäßen elektrischen Hilfsantrieb in einer Seitenansicht,
- Figur 2:: einen Längsschnitt durch den elektrischen Hilfsantrieb des Fahrrads aus Figur 1 entlang der in Figur 1 eingezeichneten Schnittlinie II,
- Figur 3:: einen Querschnitt durch den Freilauf des elektrischen Hilfsantriebs aus Figur 2 entlang der in Figur 2 eingezeichneten Schnittlinie III, und
- Figur 4:: einen Längsschnitt durch einen elektrischen Hilfsantrieb gemäß Figur 2 mit einem besonders bevorzugten alternativen Zahnscheibenfreilauf.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

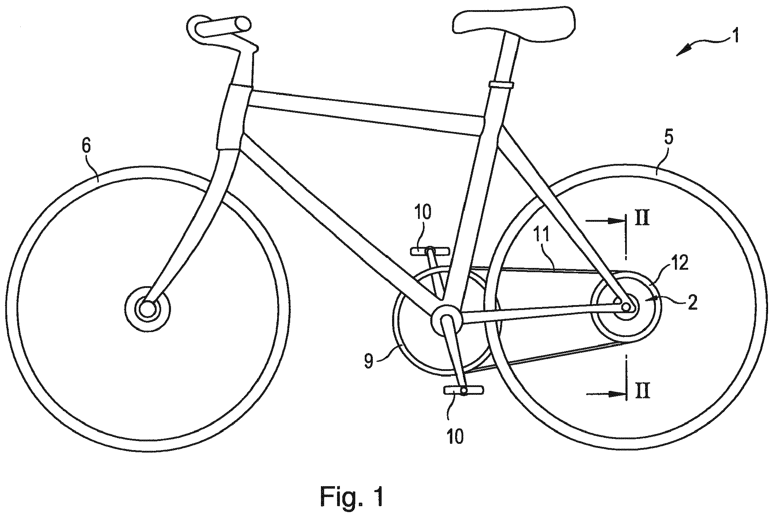

Figur 1 zeigt ein Fahrrad 1, das mit einem erfindungsgemäßen elektrischen Hilfsantrieb 2 ausgestattet ist. Der Hilfsantrieb ist als Nabenantrieb in die Achse des Hinterrads 5 integriert. Das Vorderrad 6 des Fahrrads 1 ist, wie bei einem herkömmlichen Fahrrad auch, nicht angetrieben. Der muskelkraftbetriebene Antriebsstrang des Fahrrads umfasst die Tretkurbel 9 mit dem Kettenblatt und den beiden Pedalen 10, die von der Tretkurbel angetriebene Kette 11 und das durch die Kette 11 angetriebene Ritzel 12 auf der Achse des Hinterrads 5.

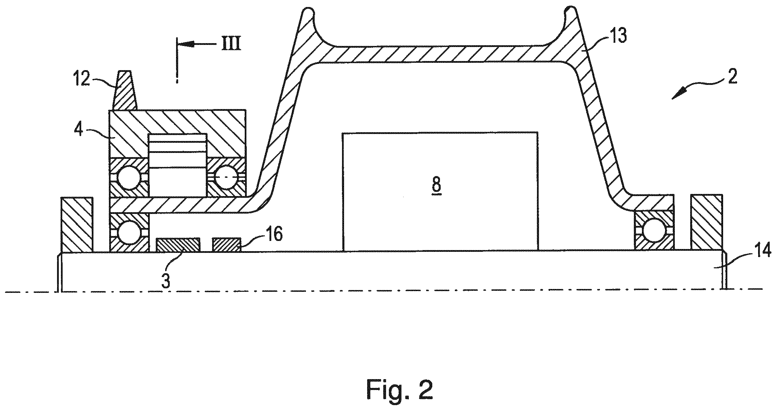

Figur 2 zeigt einen Längsschnitt durch den elektrischen Hilfsantrieb 2. Abbildung 2 zeigt, dass die Nabe 13 des Hinterrads 5 über entsprechende Kugellager drehbar auf der feststehenden Achse 14 des Hinterrads gelagert ist. Innerhalb der Nabe ist der Elektromotor 8 des elektrischen Hilfsantriebs angeordnet. An dieser Stelle wird darauf hingewiesen, dass die Abbildung lediglich schematischer Natur ist und diverse Teile nicht näher dargestellt sind. Selbstverständlich muss der Rotor des Elektromotors mit der angetriebenen Nabe 13 des Hinterrads in Eingriff stehen.

In der linken Hälfte der Abbildung ist der Freilauf 4 des muskelkraftbetriebenen Antriebsstrangs zu sehen. Der Freilauf 4 ist mittels entsprechender Kugellager drehbar auf der Hinterradnabe 13 gelagert. Am Außenumfang des Freilaufs 4 befindet sich das Ritzel 12 des muskelkraftbetriebenen Antriebsstrangs.

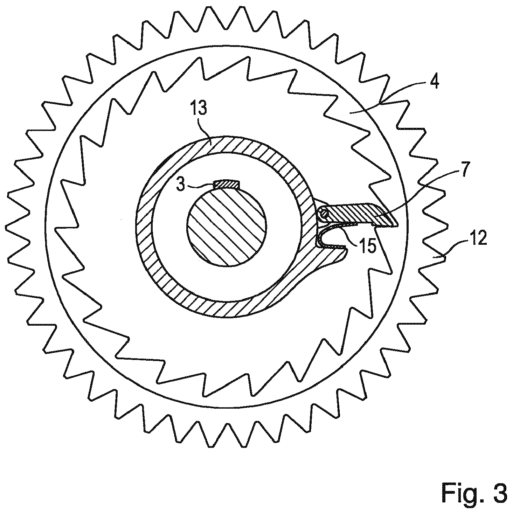

Figur 3 schließlich zeigt den schematischen Aufbau des Freilaufs. Dieser verfügt über eine Innenverzahnung, in die eine drehbar an der Nabe 13 gelagerte Sperrklinke 7 eingreift, sobald der Fahrer des Fahrrads in die Pedale 10 tritt. Die Sperrklinke 7 ist mittels einer Feder 15 gegen die Innenverzahnung des Freilaufs vorgespannt, um einen sicheren Eingriff zwischen Sperrklinke 7 und Innenverzahnung des Freilaufs 4 zu gewährleisten. Selbstverständlich können auch mehrere Sperrklinken vorgesehen sein, wobei die Sperrklinken in diesem Fall gleichmäßig über den Umfang verteilt angeordnet sein können. Unterbricht der Fahrer während der Fahrt die Betätigung der Pedale, gelangt die Sperrklinke außer Eingriff und gleitet an der Innenverzahnung des Freilaufs 4 entlang, wobei dadurch ein Klickgeräusch erzeugt wird, dass durch den in den Figuren 2 und 3 gezeigten akustischen Sensor 3, der auf axialer Position des Freilaufs an der feststehenden Achse 14 angebracht ist, erfasst werden kann. Zusätzlich dazu ist noch ein Rotationsgeber 16 zur Erfassung der Rotationsgeschwindigkeit und Rotationsrichtung der Hinterradnabe 13 und dadurch des gesamten Hinterrads 5 vorgesehen. Auf den Rotationsgeber kann verzichtet werden, sofern zur Erfassung der Rotationsgeschwindigkeit und Rotationsrichtung der Hinterradnabe die Kommutierungssensorik bzw. Kommutierungselektronik des Elektromotors verwendet wird.

Eine nicht dargestellte Steuerung des elektrischen Hilfsantriebs 2 sorgt dafür, dass der Hilfsantrieb zugeschaltet wird, sobald die Klickfrequenz eine vorbestimmte Klickfrequenz unterschreitet. Durch die zusätzliche Erfassung der Rotationsgeschwindigkeit und Rotationsrichtung der Hinterradnabe 13 wird dabei gewährleistet, dass der Hilfsantrieb abgeschaltet bleibt, wenn das Rad stillsteht oder rückwärts dreht. Wird nach der Zuschaltung des Hilfsantriebs ein Klicken des Freilaufs detektiert, wird der Hilfsantrieb wieder abgeschaltet. Die Steuerung ist auch so eingerichtet, dass sie eine Situation erkennt, in der der Fahrer die Pedale rückwärts tritt und anschließend wieder anhält. Durch Rückwärtstreten wird die Klickfrequenz zunächst erhöht, wobei sich die Klickfrequenz durch das Stoppen der Pedalbewegung wieder verringert. Durch einen Vergleich der Rotationsgeschwindigkeit des Hinterrads mit der Klickfrequenz kann dieser Zustand erkannt werden, da die Klickfrequenz bei Stillstand des Ritzels und bei einer bestimmten Rotationsgeschwindigkeit des Hinterrads für eine bekannte Anzahl an Sperrklinken berechnet werden kann.

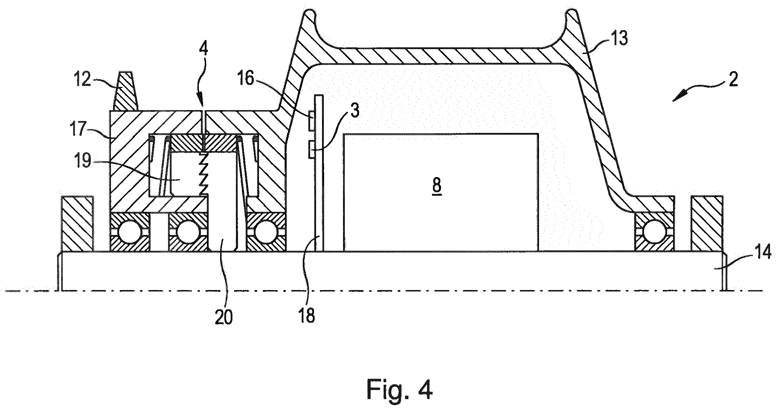

Figur 4 zeigt einen Längsschnitt des elektrischen Hilfsantriebs wie in Figur 2, jedoch mit alternativem Freilauf. Bei diesem Ausführungsbeispiel ist der Freilauf 4 als Zahnscheibenfreilauf ausgeführt. Der Freilauf weist zwei Zahnscheiben 19, 20 mit stirnseitiger Verzahnung auf. Die erste Zahnscheibe 19 ist drehfest mit dem Rotor 17 verbunden, welcher bei dieser Ausführung das Ritzel 12 trägt. Die zweite Zahnscheibe 20 ist drehfest mit der Hinterradnabe verbunden. Der Rotor ist unabhängig von der Hinterradnabe 13 drehbar auf der Achse 14 gelagert. Die beiden Zahnscheiben 19 und 20 sind mittels Federn axial gegeneinander vorgespannt, so dass sie miteinander in Eingriff geraten, wenn der Fahrer in die Pedale tritt. Sobald der Fahrer die Pedale nicht mehr betätigt, gleiten die Verzahnungen der beiden Zahnscheiben aufeinander ab. Dabei entsteht ein periodisch wiederkehrendes Geräusch, das von dem Sensor 3 erfasst wird. Sowohl der Sensor 3 als auch der Rotationssensor 16 sitzen bei diesem Ausführungsbeispiel vorzugsweise auf einer Platine 18, die innerhalb der Nabe 13 untergebracht ist.

## Patentansprüche

1. Verfahren zur Steuerung eines elektrischen Hilfsantriebs (2) eines Fahrzeugs (1) mit einem muskelkraftbetriebenen Antriebsstrang, wobei zur Steuerung des Hilfsantriebs das Signal eines Sensors (3) erfasst und ausgewertet wird, **dadurch gekennzeichnet, dass** der muskelkraftbetriebene Antriebsstrang einen Freilauf (4) aufweist, wobei die vom Freilauf erzeugten Geräusche und/oder Vibrationen von dem Sensor erfasst und zur Steuerung des Hilfsantriebs ausgewertet werden.

2. Verfahren nach Anspruch 1, **dadurch gekennzeichnet, dass** das Fahrzeug (1) mindestens ein drehbar gelagertes Rad (5, 6) aufweist, wobei zur Steuerung des Hilfsantriebs (2) auch die Rotationsgeschwindigkeit sowie Rotationsrichtung des Rades (5) erfasst wird.

3. Verfahren nach Anspruch 1 oder 2, **dadurch gekennzeichnet, dass** die vom Freilauf (4) erzeugten Geräusche und/oder Vibrationen ein bestimmtes periodisch wiederkehrendes Muster aufweisen, dem eine Frequenz des Freilaufs (4) zugeordnet werden kann, wobei der Hilfsantrieb (2) zugeschaltet wird, sobald die Frequenz des Freilaufs (4) eine vorbestimmte erste Frequenz unterschreitet.

4. Verfahren nach Anspruch 3, **dadurch gekennzeichnet, dass** der Hilfsantrieb (2) abgeschaltet bleibt, wenn das Rad (5) stillsteht oder rückwärts dreht.

5. Verfahren nach Anspruch 3 oder 4, **dadurch gekennzeichnet, dass** der Hilfsantrieb (2) nach der Zuschaltung wieder abgeschaltet wird, sobald ein ein bestimmtes periodisch wiederkehrendes Muster der vom Freilauf (4) erzeugten Geräusche und/oder Vibrationen wieder erfasst wird.

6. Verfahren nach einem der Ansprüche 3 bis 5, **dadurch gekennzeichnet, dass** die Frequenz des Freilaufs (4) mit der Rotationsgeschwindigkeit des Rades (5) verglichen wird, wobei der Hilfsantrieb (2) nicht zugeschaltet wird, wenn die Frequenz zunächst über einer zweiten Frequenz liegt, die sich bei der momentanen Rotationsgeschwindigkeit des Rades (5) und Stillstand des muskelkraftbetriebenen Antriebsstrangs einstellt, und die Frequenz anschließend auf die zweite Frequenz zurückgeht.

7. Verfahren nach Anspruch 6, **dadurch gekennzeichnet, dass** die erste Frequenz stets unter der zweiten Frequenz liegt.

8. Verfahren nach Anspruch 7, **dadurch gekennzeichnet, dass** die erste Frequenz in Abhängigkeit von der Rotationsgeschwindigkeit des Rades (5) dynamisch festgelegt wird.

9. Elektrischer Hilfsantrieb (2) für ein Fahrzeug (1) mit einem muskelkraftbetriebenen Antriebsstrang, wobei der muskelkraftbetriebene Antriebsstrang einen Freilauf (4) aufweist, dessen Geräusche und/oder Vibrationen von einem Sensor (3) erfassbar und zur Steuerung des Hilfsantriebs (2) auswertbar sind, **dadurch gekennzeichnet, dass** der elektrische Hilfsantrieb (2) eine Steuerung zur Ausführung des Verfahrens gemäß einem der Ansprüche 1 bis 8 aufweist.

10. Elektrischer Hilfsantrieb (2) nach Anspruch 9, **dadurch gekennzeichnet, dass** der Hilfsantrieb (2) als Nabenantrieb eines drehbar gelagerten Rades (5) des Fahrzeugs (1) konzipiert ist, wobei die Steuerung des Hilfsantriebs (2) derart ausgeführt ist, dass sie die Rotationsgeschwindigkeit des Rades (5) über eine Kommutierungssensorik oder Kommutierungselektronik eines Elektromotors (8) des Hilfsantriebs (2) bestimmt.

11. Elektrischer Hilfsantrieb (2) nach Anspruch 10, **dadurch gekennzeichnet, dass** die Kommutierungssensorik oder Kommutierungselektronik auf dem Hall-Effekt basiert.

12. Elektrischer Hilfsantrieb (2) nach einem der Ansprüche 9 bis 11, **dadurch gekennzeichnet, dass** der Hilfsantrieb (2) den Sensor (3) umfasst.

13. Elektrischer Hilfsantrieb (2) nach Anspruch 12, **dadurch gekennzeichnet, dass** der Sensor (3) ein akustischer Sensor ist.

14. Elektrischer Hilfsantrieb (2) nach Anspruch 12 oder 13, **dadurch gekennzeichnet, dass** der Sensor (3) ein Vibrationssensor ist.

15. Fahrzeug (1) mit einem muskelkraftbetriebenen Antriebsstrang, wobei der muskelkraftbetriebene Antriebsstrang einen Freilauf (4) aufweist, dessen Geräusche und/oder Vibrationen von einem Sensor (3) erfassbar sind, **dadurch gekennzeichnet, dass** das Fahrzeug (1) einen elektrischen Hilfsantrieb (2) gemäß einem der Ansprüche 9 bis 14 aufweist.
